# EUROPÄISCHE PATENTSCHRIFT

(11) **EP 3 130 464 B1**
(45) Veröffentlichungstag und Bekanntmachung des Hinweises auf die Patenterteilung: **02.01.2019**
(21) Anmeldenummer: 15002393.5
(22) Anmeldetag: 12.08.2015
(51) Int. Cl.: B32B 37/10, B29C 43/28, B29C 43/26, B29C 43/48, B32B 38/00

(54) **VERFAHREN UND VORRICHTUNG ZUR HERSTELLUNG EINES BODENBELAGS MIT STEINPLATTEN**
METHOD AND DEVICE FOR PRODUCING A FLOOR LINING COMPRISING STONE SLABS
PROCEDE ET DISPOSITIF DE FABRICATION D'UN REVETEMENT DE SOL COMPORTANT DE DALLES

(43) Veröffentlichungstag der Anmeldung: 15.02.2017
(73) Patentinhaber: Bernhard Voith GmbH, 73037 Göppingen (DE)
(72) Erfinder: VOITH, Bernhard, 73113 Ottenbach (DE)
(74) Vertreter: Fürst, Siegfried

(56) Entgegenhaltungen:
- EP-A1- 0 653 527
- EP-A1- 2 360 016
- WO-A1-90/06841
- DE-A1-102011 008 974
- DE-U1-202006 019 074
- GB-A- 2 416 767
- US-A- 4 290 248
- US-A1- 2011 183 101

## Beschreibung

Die Erfindung betrifft ein Verfahren zur Herstellung eines Bodenbelages aus mindestens einer Schicht eines thermoplastischen, granulierten Materials und einer darauf angeordneten Oberschicht aus Steinplatten mittels einer kontinuierlich arbeitenden Bandpresse gemäß dem Oberbegriff des Anspruches 1. Ferner betrifft die Erfindung eine Vorrichtung zur Herstellung eines Bodenbelages aus mindestens einer Schicht thermoplastischen Materials auf einer Bandpresse mit endlos umlaufenden Bändern, die miteinander einen Spalt bilden, wobei eines der Bänder unten angeordnet ist gemäß dem Oberbegriff des Anspruches 4. Weiterhin betrifft die Erfindung einen Bodenbelag mit mindestens einer unteren Schicht aus einem thermoplastischen Material und einer Oberschicht aus Steinplatten.

Aus dem Stand der Technik sind viele Bodenbeläge bekannt, die aus einem thermoplastischen Granulat hergestellt werden.
So ist aus der WO-A-90/06841 einerseits ein Verfahren und eine Vorrichtung für einen nicht kontinuierlichen Herstellungsprozess einer bahnförmigen Platte aus einem oder mehreren thermoplastischen Materialien bekannt.
Bekannt sind auch die kontinuierlich arbeitenden Doppelbandpressen, mit denen man derartige Bodenbeläge herstellt. Hierzu seien nur die Dokumente DE 197 51 516 C2 und DE 10 2007 063 261 A1 genannt.

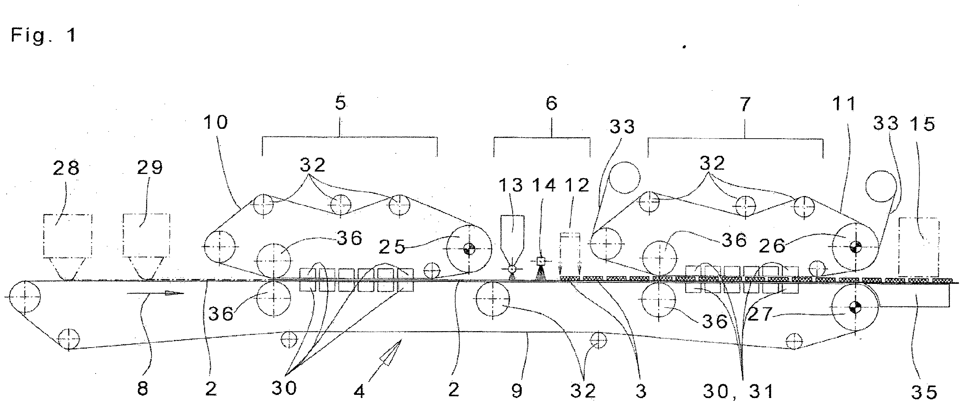

Aus dem Dokument DE 10 2010 005 068 A1 ist ein Bodenbelag bekannt, der eine Unterseite aus mindestens einer Schicht eines thermoplastischen Materials. Die Oberseite dieses Bodenbelages besteht aus Steinplatten, die auf der unteren Schicht haften. Bezüglich der Figur 1 ist dort erwähnt, dass durch den Pressdruck das thermoplastische Material auch in die Fugen gepresst werden soll.

Es hat sich aber gezeigt, dass auch bei hohen Drücken auf die Oberflächen der Steinplatten, sich das thermoplastische Material nicht ausreichend in die Fugen drückt. Die Steinplatten erfahren dadurch keinen ausreichenden Kantenschutz und die Verlegung der Platten ist durch fehlende oder ungenaue Kanten ebenfalls erschwert.

Es ist deshalb Aufgabe der Erfindung, die beschriebenen Probleme zumindest zu reduzieren.

Die Aufgabe wird durch ein Verfahren zur Herstellung eines Bodenbelages mit einer, Steinplatten aufweisenden Oberschicht mit den Merkmalen des Anspruches 1 sowie einer Vorrichtung zur Herstellung eines Bodenbelages mit einer, Steinplatten aufweisenden Oberschicht mit den Merkmalen des Anspruches 4 gelöst.
Vorteilhafte Ausgestaltungen der Erfindung sind in und mit den Unteransprüchen 2, 3 sowie 5 bis 15 offenbart.

Gemäß der Erfindung wird in dem neuen Fertigungsverfahren eine Bandpresse mit zwei oberen Pressbändern versehen. Dadurch sind zusammen mit dem unteren Pressband insgesamt drei Pressbänder vorhanden. Man kann also hier nicht mehr von einer Doppelbandpresse sprechen.
Das Besondere ist aber, dass - in Produktionsrichtung betrachtet - in einem ersten Abschnitt der Bandpresse zwischen dem ersten oberen Pressband und dem unteren Pressband das thermoplastische Material vorverdichtet wird, um danach dann in einem zweiten Abschnitt der Bandpresse, welcher ohne oberes Pressband ist, Steinplatten zur Bildung einer aus Steinplatten bestehenden Oberschicht auf das vorverdichtete bahnförmige und weiche Material aufgelegt werden. Danach folgt in einem dritten Abschnitt der Bandpresse ein weiteres oberes Pressband. Der pressbandfreie, obere, zweite Abschnitt wird im Rahmen der hier vorliegenden Erfindung auch obere Lücke genannt.

Gemäß der Erfindung ist diese Vorrichtung, also eine Vorrichtung mit einem Unterband, durch diese obere Lücke bestimmt, wobei diese Lücke zur Anordnung einer Schmelzkleber-Dosierung, und/oder eines Infrarot-Strahlers und einer Bestückungseinrichtung für das Auflegen von Steinplatten für die anschließende Bildung einer aus Steinplatten bestehenden Oberschicht genutzt wird.

Beim Positionieren der Steinplatten für die zu bildende Oberschicht auf der vorverdichteten thermoplastischen Materialbahn werden die Steinplatten auf Abstand zueinander gelegt. Nachdem die Steinplatten, also die Oberschicht, in dem dritten Abschnitt der Bandpresse durch Pressen mit der thermoplastischen Bahn verbunden sind, wird der erzeugte Bodenbelag am Ende der Bandpresse derart vereinzelt, so dass dann das thermoplastische Material der Fugen einen Rand, einen Überstand seitlich der Steinplatten bildet. Erfindungsgemäß wird dieser Überstand dann an die schmalen Flächen der Steinplatten angelegt. Durch ein Verdichten dieser umgelegten Geometrie (Überstand) kann man zu sauberen Formkanten kommen, die vorzugsweise mit einer Profilierung versehen sind.

Nachfolgend wird die Erfindung anhand eines in den Figuren schematisch gezeigten, die Erfindung jedoch nicht einschränkenden Ausführungsbeispiels näher erläutert. Es zeigen:
- Figur 1: eine Seitenansicht einer erfindungsgemäßen Bandpresse;
- Figur 2: einen Ausschnitt einer Draufsicht auf einen Bodenbelag, dessen Platten noch nicht zu Bodenbelagplatten vereinzelt sind;
- Figur 3: einen Schnitt durch eine einzelne, vereinzelte Bodenbelagplatte;
- Figur 4: einen Schnitt durch eine einzelne, vereinzelte Bodenbelagplatte mit umgelegtem Überstand und angeformter Formkante;
- Figur 5: eine Ansicht der Durchtrennung mittels einer Scheibe in der Fuge benachbarter Steinplatten;
- Figur 6: eine Ansicht der Anformung einer Formkante mittels einer geneigten Scheibe;
- Figur 7: eine Anformung einer Formkante mittels vibrierender Kufen;
- Figur 8: wie in Figur 7, jedoch mit gleichzeitiger Anbringung einer Profilierung;
- Figur 9a: Anformung einer Formkante mittels einer Pressform;
- Figur 9b: eine Bodenbelagplatte nach der Anformung gemäß Figur 9a;
- Figur 10: einen weiterer Auftrag von thermoplastischem Material mittels Düsen an bzw. auf einen Überstand.

Zunächst soll vorausgeschickt werden, dass Begriffe wie "links", "rechts", "oben" oder "unten" sich lediglich auf die Darstellung in den Figuren beziehen, aber von der tatsächlichen Anordnung in der Praxis abweichen können. Weiterhin soll darauf hingewiesen werden, dass die Figuren keine reinen technischen Zeichnungen sind, weshalb teilweise Schraffuren und Abbruchlinien fehlen. Auch können die relativen Dimensionen von der Wirklichkeit abweichen. In der Beschreibung nicht erwähnte Bezugszeichen ergeben sich aus der Bezugszeichenliste. Die Bezugszeichen haben in allen Figuren die gleiche Bedeutung.

In der Figur 1 ist eine Bandpresse 4 zu sehen, die in Produktionsrichtung 8 insgesamt drei kontinuierlich umlaufende Bänder 9, 10, 11 aufweist. Die Bänder 9, 10, 11 werden von Antriebswalzen 25, 26, 27 angetrieben und von weiteren Umlenkwalzen geführt. Am linken Ende der Bandpresse 4 wird auf das untere Band 9 mittels Streuer 28, 29 thermoplastisches Material 2 flächig aufgestreut. Dieses thermoplastische Material 2 liegt in granulierter Form vor und kann neben reinem thermoplastischen Material 2 auch Beimischungen von Gummi oder Kork, oder auch Naturfasern, wie Sisalfasern und Kokosfasern, beinhalten.

In einem folgenden ersten Abschnitt 5 der Bandpresse 4 sind beidseits, also unterhalb bzw. oberhalb der Bänder 9 und 10 plattenförmige Presselemente 30 angeordnet, die hier zugleich auch als Heizung zum Anschmelzen des Granulates dienen. Weiterhin kann eine Pressung auch mittels paarweise angeordneter Presswalzen 36 erfolgen.

Da das thermoplastische Material 2 zunächst als Granulat ausgebracht wird, dann erwärmt und auch verdichtet wird, entsteht dann zwangsläufig eine Materialbahn 2. Der Übergang vom Granulat zur Bahn ist zudem auch nicht genau zu definieren. In einem danach folgenden zweiten Abschnitt 6 der Bandpresse 4 kann man bereits von einer Bahn ausgehen und dennoch ist es nicht falsch, wenn man auch hier noch von dem thermoplastischen Material 2 spricht.

In diesem zweiten Abschnitt 6 liegt das thermoplastische Material 2 offen an der/seiner Oberfläche, d.h. dass es nicht mit einem Pressband 9, 10 oder 11 bedeckt ist. Dieser offene Bereich wird im Rahmen dieser Anmeldung auch "obere Lücke" genannt. Diese obere Lücke ist sehr hilfreich, weil sie zugleich die Anordnung von einer Schmelzkleber-Dosier-Einrichtung 13, einen Infrarot-Strahler 14 und einer Bestückungseinrichtung 12 für Steinplatten 3 ermöglicht. Die Bestückungseinrichtung verfährt senkrecht zur Zeichnungsebene um die Steinplatten 3 für die zu bildende Oberschicht auf das Materialband 2 legen zu

können, wobei die Steinplatten 3 mit einem relativ großen Abstand zueinander verlegt werden, um später ausreichend Material für die Kantenbedeckung zur Verfügung zu haben (dieses wird später noch näher erläutert).

Nach der Bestückung werden die Steinplatten 3 in einem dritten Abschnitt 7 der Bandpresse 4 auf das noch weiche thermoplastische Material 2 gepresst, wodurch sich die Steinplatten 3 und das thermoplastische Material 2 miteinander verbinden. In diesem dritten Abschnitt sind auch wiederum plattenförmige Presselemente paarweise angeordnet, jedoch dienen diese Presselemente 31 der Kühlung der Steinplatten 3 und des thermoplastischen Materials 2. Damit beim Pressen im dritten Abschnitt 7 die Steinplatten 3 durch die oberen Presselemente 31 nicht beschädigt werden, ist es vorteilhaft, wenn ein dickenelastisches Band 33 mit durch den dritten Abschnitt der Bandpresse 4 hindurch geführt wird. Ist der linke Haspel (ohne Bezugszeichen) leer, so können der aufwickelnde Haspel (auch ohne Bezugszeichen) nach vorne und der leere Haspel nach hinten umgesetzt werden.

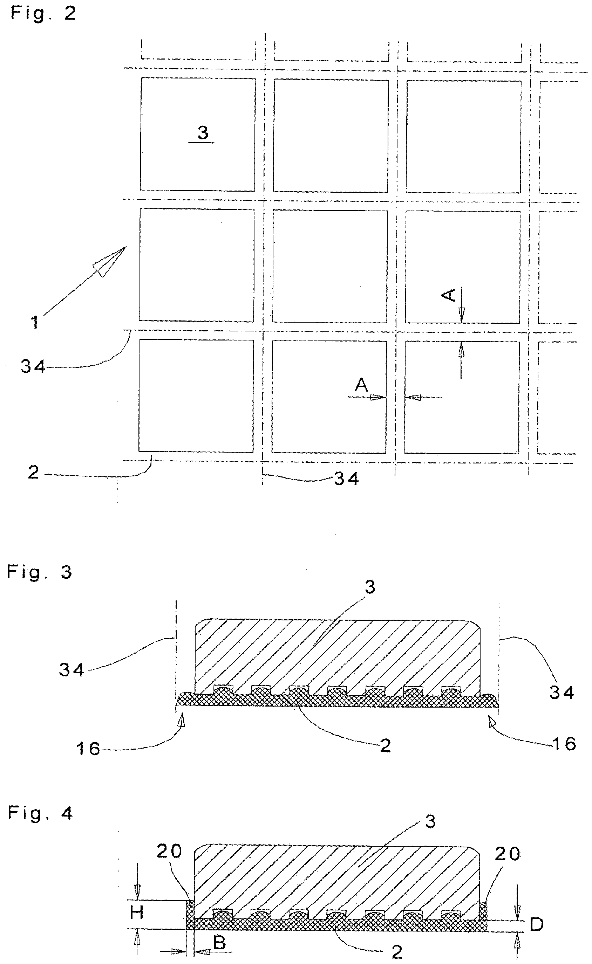

Nachdem die thermoplastische Materialbahn 2 und die Steinplatten 3 den dritten Abschnitt 7 verlassen haben laufen sie beispielsweise auf einen Abnahmetisch 35 auf. Eine Vereinzelungs-Einrichtung 15 kann dann das großflächige Gebilde aus thermoplastischer Materialbahn 2 und den vielen Steinplatten 3 darauf, also der erzeugte Bodenbelag 1, in einzelne Bodenbelagplatten zerteilt werden, wobei dann immer in den Fugen 34, siehe Fig. 2, geschnitten wird. Es ist aber auch möglich, dass größere Abschnitte des Bodenbelages 1 am Ende der Vorrichtung abgetrennt werden, um dann die endgültige Vereinzelung in einer separaten Maschine zu erledigen.

In der Figur 2 wird gezeigt, wie das thermoplastische Material 2 - also die Materialbahn 2 - und die Steinplatten 3, also der erzeugte Bodenbelag 1, in der Draufsicht aussehen. Die Steinplatten 3 liegen in dem Bodenbelag 1 in einem Abstand A (vorzugsweise ca. 6 mm) zueinander und werden entlang der Trennlinien 34 getrennt. Dieses Trennen kann z.B. mittels oszillierender Messer oder umlaufender Drähte oder Sägebänder erfolgen. Besonders vorteilhaft ist das Trennen jedoch mittels rotierender Scheiden, wie später noch erläutert wird.

In der Figur 3 ist eine einzelne Bodenbelagplatte im Schnitt zu sehen. Hier kann man gut erkennen, dass der Überstand 16 des thermoplastisches Materials 2 leicht angestaucht ist. Dieses Anstauchen ist auf Scheiben 17 zurückzuführen, die später noch erwähnt werden.

Mit der Figur 4 wird eine weitere Bearbeitungsstufe an der Steinplatte 3 der Bodenbelagplatte gezeigt. Hier hat eine Nachformung des Überstandes 16 stattgefunden, so dass präzise Formkanten 20 entstanden sind. Das Maß D beträgt üblicherweise 2 mm, während die Maße H und B 5 mm bzw. 1,5 mm betragen.

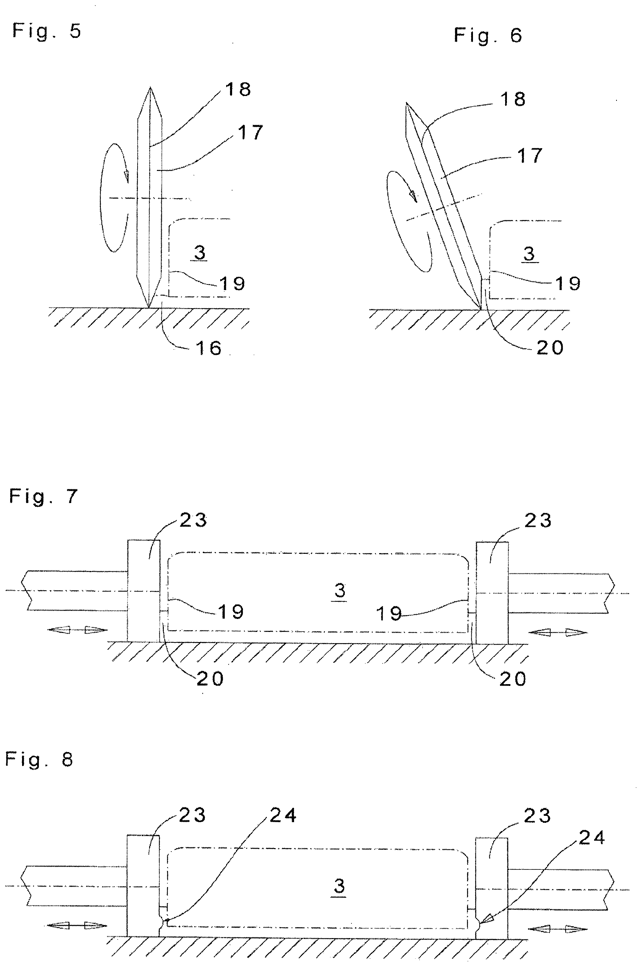

Mit der Figur 5 wird nun gezeigt, wie eine rotierende Scheibe 17 mit einer Schneidkante 18 den Bodenbelag 1 zu Bodenbelagplatten vereinzelt.

In der Figur 6 wird wiederum eine Scheibe 17 verwendet, jedoch nicht mehr um den Bodenbelag 1 zu Bodenbelagplatten zu vereinzeln, sondern um durch ihre räumliche Lage mit der Fase ihrer Schneide den Überstand 16 an die schmale Fläche 19 der Steinplatte 3 anzulegen.

Gemäß den Figuren 7 und 8 werden mittels parallel zu Kanten 19 angeordneten Kufen 23 und entsprechenden Schwingungen in der Richtung der gezeigten Doppelpfeile die Formkanten 20 gebildet. Der Antrieb für diese Schwingungen erfolgt vorteilhafterweise mittels Ultraschall. In der Ausgestaltung gemäß der Figur 8 werden sogar Profilierungen 24 in die Formkante 20 eingearbeitet, wobei hier sich ergänzende Profilierungen 24 geformt werden (hier konkav und konvex). Aber es sind auch andere Profilierungen denkbar, wie z.B. Sägezahn-, Nut - und Feder-Profile usw.

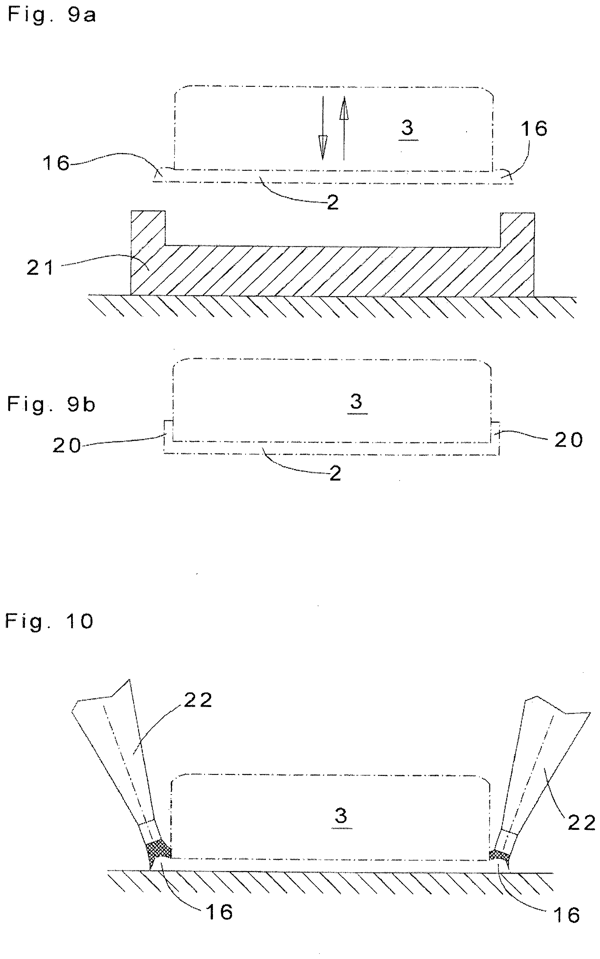

In der Figur 9a wird der Überstand 16 mittels einer Pressform 21 zu Formkanten20 umgeformt. Die beiden Pfeile in der Figur 9a deuten das Einführen und das wieder Herausnehmen der Bodenbelagplatte in bzw. aus der Pressform 21 an. Die Figur 9b zeigt die Bodenbelagplatte nach der Umformung.

Mit der Figur 10 wird ein weiterer Materialauftrag mit thermoplastischen Material 2 an oder auf den Überstand 16 neben der Steinplatte 3 gezeigt. Der Materialauftrag erfolgt mittels mindestens einer Düse 22, die vorteilhafterweise von einem Handlingsystem - vorzugsweise einem Industrieroboter - geführt wird. Mit diesem Auftrag ist aber der Aufbau der Formkante noch nicht beendet, denn nach dem Auftrag muss noch eine Formung und möglicherweise auch Verdichtung des thermoplastischen Materials 2 mit den zu den Figuren 6, 7, 8 oder 9 genannten Verfahrensschritten erfolgen.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.
Die Erfindung ist, wie vorn bereits genannt, nicht auf das beschriebene Ausführungsbeispiel beschränkt. Dem Kerngedanken der Erfindung folgend kann die obere Lücke nicht nur zum Auflegen von Steinplatten, wie in dem Ausführungsbeispiel beschriebenen, genutzt werden, sondern grundsätzlich für das Aufbringen einer Oberschicht, also einer weiteren Schicht, auf das bereits zu einem bahnförmigen Zwischenprodukt geformte thermoplastische Material bzw. zur weiteren Manipulation/Bearbeitung dieses Zwischenproduktes. Unter Anwendung des Prinzips der Erfindung können demnach auch folgende Ausführungsvarianten Anwendung finden:
- Aufstreuen weiterer thermoplastischer Materialien in Granulat oder Pulverform, wenn z.B. es nicht erwünscht ist, dass sich mehrere vor der Bandpresse übereinander gestreute Schichten unterschiedlicher Materialien zu sehr durchdringen, sondern eher eine saubere Trennlinie erzeugt werden soll. Kann auch kombiniert werden mit Trägerfolie oder -textil, welche vor dem Aufstreuen zulaufen;
- Aufkaschieren einer oder mehrerer, auch schon vorkonfektionierter Mehrschicht-Flächengebilde, Folien oder Vliesstoffe oder ähnliches zu Verstärkungs- und/oder Dekorationszwecken, auch bedruckte Dessin-Träger;
- Lackauftrag, mit oder ohne anschließender Strahlenhärtung, darunter verstanden sind Flüssigauftrag, Pulverauftrag, Mehrkomponentenauftrag aus Mischköpfen (z.B. PUR Systeme) oder auch Transferlackierung;
- Dessin-Druck digital direkt auf die Oberfläche oder auf den zukaschierten Druckträger (Papier, Folien) und anschließender Abdeckung durch zulaufende transparente Folien bzw. auch überstreuen mit thermolatischen Materialien, die in der nachfolgenden Presse durch Filmbildung klar und transparent werden;
- Auflegen von mehr oder weniger starren gestückelten Decklagen aus thermoplastischem, elastischem oder duroplastischem Material oder Kombinationen davon, welches in allen Fällen selber mehrschichtig homogen oder heterogen sein kann;
- Auflegen von mehr oder weniger starren gestückelten Decklagen aus thermoplastischem, elastischem oder duroplastischem Material oder Kombinationen davon, welches in allen Fällen selber mehrschichtig homogen oder heterogen sein kann, z.B. beabstandete Teile zur Ausbildung von Trägerstrukturen, die im Pressvorgang ins Material eingedrückt werden (z.B. Metallgitter);
- mechanische Bearbeitung, z.B. Stanzen oder Einprägen von Vertiefungen in das bahnförmige Zwischenprodukt, um diese mit anderen Materialien aufzufüllen, zur Herstellung von heterogenen Gebilden unterschiedlicher lokaler Oberflächeneigenschaften, aber durchgehend glatter Fläche;
- Strahlenvernetzung der Unterschicht, also des bahnförmigen Zwischenprodukt, vor dem Aufbringen weiterer Schichten auf dieses Zwischenprodukt, die thermoplastisch bleiben sollen oder anderweitig gehärtet und/oder vernetzt werden. Das wäre eine Methode zur Herstellung eines Laminats mit nicht thermoplastischem (formstabilem) Träger und thermoplastischer Oberseite.

### Bezugszeichenliste

- 1: Bodenbelag
- 2: thermoplastisches Material, Materialbahn
- 3: Steinplatte
- 4: Bandpresse
- 5: erster Abschnitt der Bandpresse
- 6: zweiter Abschnitt der Bandpresse, obere Lücke
- 7: dritter Abschnitt der Bandpresse
- 8: Produktionsrichtung
- 9: Band
- 10: Band
- 11: Band
- 12: Bestückungseinrichtung
- 13: Schmelzkleber-Dosier-Einrichtung
- 14: Infrarot-Strahler
- 15: Vereinzelungs-Einrichtung
- 16: Überstand
- 17: Scheiben (schneidend und/oder formend)
- 18: Schneidkante der Scheibe 17
- 19: schmale Fläche der Steinplatte
- 20: Formkante
- 21: Pressform
- 22: Düse
- 23: Kufen
- 24: Profilierung
- 25: Antriebswalze
- 26: Antriebswalze
- 27: Antriebswalze
- 28: Streuer
- 29: Streuer
- 30: Presselement (Heizung)
- 31: Presselement (Kühlung)
- 32: Umlenkwalze
- 33: dickenelastisches Band
- 34: Trennlinie
- 35: Abnahmetisch
- 36: Presswalze

- A: Abstand der Steinplatten
- H: Höhe der Formkante
- B: Breite der Formkante
- D: Dicke der Bahn 2

## Patentansprüche

1. Verfahren zur Herstellung eines Bodenbelages (1) aus mindestens einer Schicht eines thermoplastischen, granulierten Materials (2) und darauf angeordneten Steinplatten (3), mittels einer kontinuierlich arbeitenden Bandpresse (4), bei dem zunächst, in Produktionsrichtung gesehen, auf das untere Band (9) der Bandpresse (4) das thermoplastische, granulierte Material flächig aufgestreut wird,
***dadurch gekennzeichnet, dass***
- in einem folgenden ersten Abschnitt (5) der Bandpresse (4) dieses granulierte thermoplastische Material (2) erwärmt sowie vorverdichtet wird zu einem bahnförmigen Material (2);
- in einem in Produktionsrichtung (8) nachfolgenden weiteren, zweiten Abschnitt (6) werden die Steinplatten (3) zur Bildung einer aus Steinplatten (3) bestehenden Oberschicht auf das vorverdichtete bahnförmige und weiche Material (2) aufgelegt;
- in einem in Produktionsrichtung (8) nachfolgenden weiteren, dritten Abschnitt (7) wird die aus Steinplatten (3) bestehende Oberschicht durch Pressen mit thermoplastischen Bestandeilen des bahnförmigen Materials, also der Materialbahn (2) verbunden.

2. Verfahren nach Anspruch 1,
***dadurch gekennzeichnet, dass***
beim Auflegen der Steinplatten (3) zur Bildung einer aus Steinplatten (3) bestehenden Oberschicht selbige (3) auf Abstand (A) zueinander auf das vorverdichtete bahnförmige und weiche Material (2) gelegt werden.

3. Verfahren nach Anspruch 2,
***dadurch gekennzeichnet, dass***
die Abstände (A) zwischen den aufgelegten Steinplatten (3) größer sind als die späteren Fugen des fertigen Bodenbelages (1).

4. Vorrichtung zur Herstellung eines Bodenbelages aus mindestens einer Schicht thermoplastischen Materials (2) auf einer kontinuierlich arbeitenden Bandpresse (4) mit endlos umlaufenden Bändern (9, 10, 11), die miteinander einen Spalt bilden, wobei eines der Bänder (9) unten angeordnet ist,
***dadurch gekennzeichnet, dass***
oberhalb des unteren Bandes (9), in Produktionsrichtung (8) betrachtet, hintereinander mindestens zwei endlos umlaufende, obere Bänder (10, 11) angeordnet sind, zur Erzeugung eines einen Spalt bildenden ersten Abschnittes (5) der Bandpresse (4) und eines zu diesem ersten Abschnitt (5) mit Abstand angeordneten und einen Spalt bildenden weiteren, dritten Abschnittes (7) der Bandpresse (4), und dass der Abstand zwischen mindestens zwei der oberen Bänder (10, 11) ein eine Lücke - eine sogenannte obere Lücke - aufweisender zweiter Abschnitt (6) der Bandpresse (4) ist, wodurch in diesem zweiten Abschnitt (6) ein Zugriff von oben auf die Materialbahn (2), zur Aufbringung von Steinplatten (3) auf selbige (2) für die zu bildende Oberschicht, möglich ist.

5. Vorrichtung nach Anspruch 4,
***dadurch gekennzeichnet, dass***
dem eine obere Lücke aufweisenden zweiten Abschnitt (6) eine Bestückungseinrichtung (12) zur Aufbringung von Steinplatten (3) auf die Materialbahn (2) zugeordnet ist.

6. Vorrichtung nach Anspruch 4 oder 5,
***dadurch gekennzeichnet, dass***
dem eine obere Lücke aufweisenden zweiten Abschnitt (6) eine Schmelzkleber-Dosier-Einrichtung (13) und/oder ein Infrarot-Strahler (14) zugeordnet ist.

7. Vorrichtung nach mindestens einem der
Ansprüche 4 bis 6,
***dadurch gekennzeichnet, dass***
- in Produktionsrichtung (8) betrachtet - am Ende der Vorrichtung eine Vereinzelungs-Einrichtung (15) angeordnet ist, zum Quer- und Längsteilen der Materialbahn (2) des erzeugten Bodenbelages (1) zwischen dessen Steinplatten (3), wodurch einzelne Bodenbelagplatten entstehen mit einem Überstand (16) des thermoplastischen Materials (2) bzw. der Materialbahn (2) an den Steinplatten (3).

8. Vorrichtung nach Anspruch 7,
***dadurch gekennzeichnet, dass***
die Vereinzelungs-Einrichtung (15) als eigenständiges Mittel zum Quer- und Längsteilen der Bandpresse (4) nachgeordnet ist.

9. Vorrichtung nach Anspruch 7 oder 8,
***dadurch gekennzeichnet, dass***
die Vereinzelungs-Einrichtung (15) oszillierende Messer oder umlaufende Drähte oder Sägebänder aufweist.

10. Vorrichtung nach Anspruch 7 oder 8,
***dadurch gekennzeichnet, dass***
die Vereinzelungs-Einrichtung (15) rotierende - mit einer umlaufenden Schneidkante (18) versehene - Scheiben (17) aufweist.

11. Vorrichtung nach Anspruch 10,
***dadurch gekennzeichnet, dass***
- gegebenenfalls weitere - Scheiben (17) vorgesehen sind, welche durch ihre räumliche Lage auch den Überstand (16) an die schmalen Flächen (19) der Steinplatten (3) anlegen, wodurch eine Formkante (20) entsteht.

12. Vorrichtung nach mindestens einem der
Ansprüche 7 bis 10,
***gekennzeichnet***
**durch** eine Pressform (21), mit welcher der Überstand (16) an die schmalen Flächen (19) der Steinplatten (3) angelegt wird.

13. Vorrichtung nach mindestens einem der
Ansprüche 7 bis 10,
***dadurch gekennzeichnet, dass***
sie Düsen (22) aufweist, mit welchen an den Überstand (16) weiteres thermoplastisches Material (2) angespritzt wird.

14. Vorrichtung nach mindestens einem der
Ansprüche 7 bis 13,
***dadurch gekennzeichnet, dass***
sie Kufen (23) aufweist, mit welchen die Formkante (20) in das thermoplastische Material (2) hinein gewalzt wird.

15. Vorrichtung nach mindestens einem der
Ansprüche 7 bis 13,
***dadurch gekennzeichnet, dass***
sie mit Hochfrequenz betriebene Kufen (23) aufweist, mit welchen die Formkante (20) in das thermoplastische Material (2) geformt wird.

## Claims

1. Method of producing a floor covering (1) of at least one layer of a thermoplastic granulated material (2) and stone tiles (3) arranged thereon, by means of a continuously operating belt press (4) in which initially, as seen in production direction, the thermoplastic granulated material is scattered over an area on the lower belt (9) of the belt press (4), **characterised in that**
- in a following first section (5) of the belt press (4) heats and pre-compacts this granulated thermoplastic material (2) to form a web-shaped material (2);
- in a further, second section (6) downstream in production direction (8) the stone tiles (3) are placed on the pre-compacted web-shaped and soft material (10) so as to form an upper layer consisting of stone tiles (3); and
- in a further, third section (7) downstream in production direction (8) the upper layer consisting of stone tiles (3) is, by pressing, connected with thermoplastic constituents of the web-shaped material, thus the material web (2).

2. Method according to claim 1, **characterised in that** when laying the stone tiles (3) to form an upper layer consisting of stone tiles (3) the tiles (3) are placed at a spacing (A) from one another on the pre-compacted web-shaped and soft material (2).

3. Method according to claim 2, **characterised in that** the spacings (A) between the laid stone tiles (3) are larger than the later gaps of the finished floor covering (1).

4. Device for producing a floor covering of at least one layer of thermoplastic material (2) on a continuously operating belt press (4) with endless circulating belts (9, 10, 11) together defining a gap, wherein one of the belts (9) is arranged underneath, **characterised in that** arranged above the lower belt (9) are at least two endless, circulating upper belts (10, 11), which are successive as considered in production direction (8), for producing a first section (5), which forms a gap, of the belt press (4) and a further, third section (7), which is arranged at a spacing from this first section (5) and forms a gap, of the belt press (4) and that the spacing between at least two of the upper belts (10, 11) is a second section (6), which has a break - a so-called upper break - of the belt press (4), whereby access from above to the material web (2) for application of stone tiles (3) to the web (2) for the upper layer to be formed is possible in this second section (6).

5. Device according to claim 4, **characterised in that** an equipping device (12) for application of stone tiles (3) to the material web (2) is associated with the second section (6) having an upper break.

6. Device according to claim 4 or 5, **characterised in that** a molten glue metering device (13) and/or an infrared radiator (14) is or are associated with the second section (6) having an upper break.

7. Device according to at least one of claims 4 to 6, **characterised in that** separating equipment (15) for transverse and longitudinal parting of the material web (2) of the produced floor covering (1) between the stone tiles (3) thereof is arranged at the end of the device as considered in production direction (8), whereby individual floor covering tiles are created with a projection (16) of the thermoplastic material (2) or the material web (2) at the stone tiles (3).

8. Device according to claim 7, **characterised in that** the separating equipment (15) is arranged downstream of the belt press (4) as independent means for the transverse and longitudinal parting.

9. Device according to claim 7 or 8, **characterised in that** the separating equipment (15) comprises oscillating knives or encircling wires or saw belts.

10. Device according to claim 7 or 8, **characterised in that** the separating equipment (15) comprises rotating discs (17) provided with an encircling cutting edge (18).

11. Device according to claim 10, **characterised in that** optionally further discs (17) are provided, which by virtue of the physical position thereof also bear against the projection (16) at the narrow surfaces (19) of the stone tiles (3), whereby a shaped edge (20) is created.

12. Device according to at least one of claims 7 to 10, **characterised by** a press mould (21) by which the projection (16) is laid against the narrow surfaces (19) of the stone tiles (3).

13. Device according to at least one of claims 7 to 10, **characterised in that** it comprises nozzles (22) by which further thermoplastic material (2) is sprayed onto the projection (16).

14. Device according to at least one of claims 7 to 13, **characterised in that** it has runners (23) by which the shaped edge (20) is rolled into the thermoplastic material (2).

15. Device according to at least one of claims 7 to 13, **characterised in that** it has runners (23) which are operated by high frequency and by which the shaped edge (20) is formed in the thermoplastic material (2).

## Revendications

1. Procédé de fabrication, au moyen d'une presse (4) à bandes fonctionnant en continu, d'un revêtement de sol (1) composé d'au moins une couche d'un matériau thermoplastique granulé (2), et de dalles de pierre (3) déposées sur ce dernier, procédé dans lequel ledit matériau thermoplastique granulé est tout d'abord répandu à plat sur la bande inférieure (9) de ladite presse (4) à bandes, en considérant dans la direction de la production,
**caractérisé par le fait que**,
- sur un premier tronçon successif (5) de la presse (4) à bandes, ce matériau thermoplastique granulé (2) est soumis à un chauffage, ainsi qu'à un précompactage, afin d'obtenir un matériau (2) en forme de nappe ;
- sur un deuxième tronçon supplémentaire (6), consécutif dans la direction (8) de la production, les dalles de pierre (3) sont déposées sur ledit matériau tendre précompacté (2), en forme de nappe, en vue de constituer une couche supérieure composée de dalles de pierre (3) ;
- sur un troisième tronçon additionnel (7), consécutif dans ladite direction (8) de la production, ladite couche supérieure composée de dalles de pierre (3) est reliée, par pressage, à des composants thermoplastiques dudit matériau en forme de nappe, c'est-à-dire de la nappe de matériau (2).

2. Procédé selon la revendication 1, **caractérisé par le fait que**, lors de la mise en place des dalles (3) en vue de constituer une couche supérieure composée de dalles de pierre (3), lesdites dalles (3) sont déposées, avec espacement mutuel (A), sur le matériau tendre précompacté (2) en forme de nappe.

3. Procédé selon la revendication 2, **caractérisé par le fait que** les espacements (A), entre les dalles de pierre (3) mises en place, sont plus grands que les joints ultérieurs du revêtement de sol (1) achevé.

4. Dispositif dévolu à la fabrication d'un revêtement de sol constitué d'au moins une couche d'un matériau thermoplastique (2), sur une presse (4) à bandes fonctionnant en continu et munie de bandes (9, 10, 11) à révolution sans fin qui forment, entre elles, un espace interstitiel, l'une (9) desdites bandes occupant un emplacement inférieur, **caractérisé par le fait**
**qu'**au moins deux bandes supérieures (10, 11) à révolution sans fin sont placées en succession au-dessus de la bande inférieure (9), en considérant dans la direction (8) de la production, afin de donner naissance à un premier tronçon (5) de la presse (4) à bandes, formant un espace interstitiel, et à un troisième tronçon additionnel (7) de ladite presse (4) à bandes, qui est situé à distance de ce premier tronçon (5) et forme un espace interstitiel ; et par le fait que l'espacement entre au moins deux, parmi lesdites bandes supérieures (10, 11), est un deuxième tronçon (6) de ladite presse (4) à bandes qui présente une discontinuité - désignée par « discontinuité supérieure » -, autorisant ainsi, sur ce deuxième tronçon (6), un accès de haut en bas à la nappe de matériau (2) en vue de la mise en place, sur ladite nappe (2), de dalles de pierre (3) dédiées à la couche supérieure devant être constituée.

5. Dispositif selon la revendication 4, **caractérisé par le fait qu'**un appareil de garnissage (12), affecté à la mise en place de dalles de pierre (3) sur la nappe de matériau (2), est associé au deuxième tronçon (6) présentant une discontinuité supérieure.

6. Dispositif selon la revendication 4 ou 5, **caractérisé par le fait qu'**un appareil (13) de dosage d'un adhésif thermofusible, et/ou un diffuseur d'infrarouges (14), est (sont) associé(s) au deuxième tronçon (6) présentant une discontinuité supérieure.

7. Dispositif selon au moins l'une des revendications 4 à 6, **caractérisé par le fait qu'**un appareil de clivage (15) est implanté à l'extrémité dudit dispositif - en considérant dans la direction (8) de la production - en vue de scinder transversalement et longitudinalement la nappe de matériau (2) du revêtement de sol (1) créé, entre les dalles de pierre (3) de ce dernier, donnant ainsi naissance à des dalles individuelles de revêtement de sol avec débord (16) respectif, au niveau desdites dalles de pierre (3), du matériau thermoplastique (2) ou de ladite nappe de matériau (2).

8. Dispositif selon la revendication 7, **caractérisé par le fait que** l'appareil de clivage (15) est installé, en aval, en tant que moyen autonome affecté aux subdivisions transversale et longitudinale de la presse (4) à bandes.

9. Dispositif selon la revendication 7 ou 8, **caractérisé par le fait que** l'appareil de clivage (15) est équipé de lames oscillantes ou de fils métalliques en défilement continu, voire de rubans de scie.

10. Dispositif selon la revendication 7 ou 8, **caractérisé par le fait que** l'appareil de clivage (15) comporte des disques rotatifs (17) - munis d'une arête tranchante (18) à défilement continu -.

11. Dispositif selon la revendication 10, **caractérisé par** la présence de disques (17) - supplémentaires, le cas échéant - qui, de par leur position dans l'espace, instaurent également le débord (16) au niveau des surface étroites (19) des dalles de pierre (3), donnant ainsi naissance à une arête profilée (20).

12. Dispositif selon au moins l'une des revendications 7 à 10, **caractérisé par** un moule de pressage (21), par lequel le débord (16) est instauré au niveau des surfaces étroites (19) des dalles de pierre (3).

13. Dispositif selon au moins l'une des revendications 7 à 10, **caractérisé par le fait qu'**il est pourvu de buses (22) par lesquelles un matériau thermoplastique supplémentaire (2) est rapporté, par injection, au niveau du débord (16).

14. Dispositif selon au moins l'une des revendications 7 à 13, **caractérisé par le fait qu'**il est muni de patins (23), par lesquels l'arête profilée (20) est façonnée dans le matériau thermoplastique (2).

15. Dispositif selon au moins l'une des revendications 7 à 13, **caractérisé par le fait qu'**il est doté de patins (23) à actionnement par haute fréquence, par lesquels l'arête profilée (20) est mise en forme dans le matériau thermoplastique (2).
